# EUROPEAN PATENT SPECIFICATION

(11) **EP 3 633 948 B1**
(45) Date of publication and mention of the grant of the patent: **03.11.2021**
(21) Application number: 18910232.0
(22) Date of filing: 28.09.2018
(51) Int. Cl.: H04L 29/06

(54) **ANTI-ATTACK METHOD AND DEVICE FOR SERVER**
VERFAHREN UND VORRICHTUNG ZUR IMPLEMENTIERUNG EINES SERVERANGRIFFSSCHUTZES
PROCÉDÉ ET DISPOSITIF ANTI-ATTAQUES POUR SERVEUR

(30) Priority: 22.08.2018 CN 201810963244
(43) Date of publication of application: 08.04.2020
(73) Proprietor: Wangsu Science & Technology Co., Ltd., Shanghai 200030 (CN)
(72) Inventor: ZHUANG, Xiaochuan, Shanghai 200030 (CN); LIU, Maolin, Shanghai 200030 (CN); ZHANG, Zhiming, Shanghai 200030 (CN)
(74) Representative: de Arpe Fernandez, Manuel
(86) International application number: PCT/CN2018/108243
(87) International publication number: WO 2020/037781

(56) References cited:
- CN-A- 102 769 549
- CN-A- 103 957 195
- CN-A- 106 357 628
- CN-A- 107 968 765
- CN-A- 108 206 814
- US-A1- 2011 099 622
- US-A1- 2014 373 138
- Lior Rozen: "HTTP Attacks | Radware Blog", , 15 November 2017 (2017-11-15), XP055683853, Retrieved from the Internet: URL:https://blog.radware.com/security/2017 /11/http-attacks/ [retrieved on 2020-04-07]

## Description

### FIELD OF DISCLOSURE

The present disclosure generally relates to the field of computer technology and, more particularly, relates to a method and apparatus for implementing a server anti-attack.

### BACKGROUND

With the development of the Internet, a variety of network platforms emerge one after another. For these network platforms, there are more and more malicious network attacks. Taking a live streaming service platform as an example, a majority of live streaming providers select a CDN system for accelerating the live streaming. Since the IP address of a server in a CDN system is visible to the outside, the server easily gets attacked by a hacker. For example, a hacker may launch a large-scale SYN attack or URL attack against a server, which likely causes the server to be overloaded, and thus affects the service quality on a node(s).

In a conventional CDN system, a server may perform, at a kernel layer, certain protection against an SYN flood attack towards TCP. However, this kind of protection may only be used against a general SYN attack initiated by a virtual IP address, but may not prevent an attack initiated by a real IP address.

In light of the above, there is a need for a method for implementing a server anti-attack, to solve the problem in the existing technologies that an attack initiated by a real IP address cannot be prevented. The document US 2011/0099622 A1 discloses a DDoS attack detection and response apparatus. The document CN 107 968 765 A discloses a network intrusion detection method in which an intrusion detection server receives n network request data packages sent by at least one to-be-detected server in a first preset time period. The document "HTTP Attacks | Radware Blog" relates to HTTP attacks.

### BRIEF SUMMARY OF THE DISCLOSURE

The embodiments of the present disclosure provide a method and apparatus for implementing a server anti-attack, to solve the problem in the existing technologies that an attack initiated by a real IP address cannot be prevented.

The embodiments of the present disclosure provide a method for implementing a server anti-attack and an apparatus including functionalities of implementing the methods. The scope of the invention is in accordance with the claims. Further optional features are provided in accordance with the dependent claims.

In this way, based on the different request types, the server may adopt different anti-attack strategies to achieve the objective of server anti-attack, which may effectively improve the anti-attack capability of the entire server, and effectively reduce the risk caused by the server attack, thereby improving the service quality of the server, ensuring the consistency and stability of the services provided by the server, and enhancing the user experience of Internet access.

### BRIEF DESCRIPTION OF THE DRAWINGS

To make the technical solutions in the embodiments of the present disclosure clearer, a brief introduction of the accompanying drawings consistent with the description of the embodiments will be provided hereinafter.
FIG. 1 is a schematic diagram of a network architecture according to some embodiments of the present disclosure;
FIG. 2 is a flowchart of a method for implementing a server anti-attack according to some embodiments of the present disclosure;
FIG. 3 is a flowchart of a method for determining a target request type according to some embodiments of the present disclosure;
FIG. 4 is a schematic diagram of an overall process according to some embodiments of the present disclosure; and
FIG. 5 is a schematic structural diagram of an apparatus for implementing a server anti-attack according to some embodiments of the present disclosure.

### DETAILED DESCRIPTION

The present disclosure will be made in details hereinafter with reference to the accompanying drawings of the specification. The specific operations in the method-related embodiments may also be applicable to the apparatus-related embodiments.

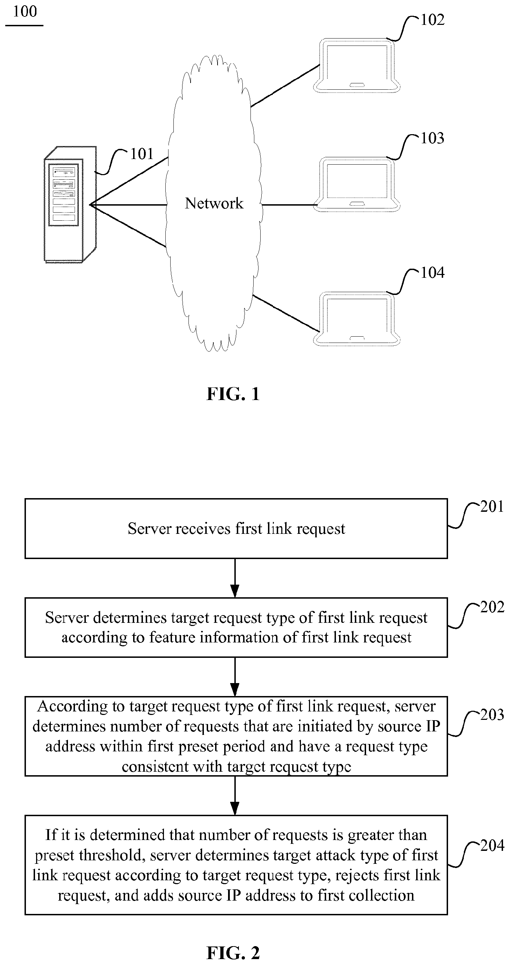

FIG. 1 exemplarily shows a schematic diagram of a system architecture according to some embodiments of the present disclosure. As shown in FIG. 1, the system 100 includes a server 101 and at least one client device, for example, the client device 102, the client device 103, and the client device 104 shown in the figure. The server 101 may communicate with the client device 102, the client device 103, and the client device 104 through a network. For example, any of the client device 102, the client device 103, and the client device 104 may send a link request to the server 101. The server 101 may provide access to the client device based on the link request and return a response message to the client device.

In the embodiments of the present disclosure, the server may include a large variety of types of servers, such as an edge server in a CDN system. Further, for a CDN system, different edge servers may parse different domain name requests. Accordingly, the server in the embodiments of the present disclosure may be an edge server for parsing live streaming service, or an edge server for parsing search service, or an edge server for parsing video service, which is not limited by the present disclosure.

Further, the client devices may include a large variety of types of devices, such as a notebook, a smartphone, a tablet, a smart TV, etc.

Based on the system architecture shown in FIG. 1, FIG. 2 exemplarily shows a flowchart of a method for implementing a server anti-attack according to some embodiments of the present disclosure. As shown in FIG. 2, the method includes the following specific steps:
Step 201: The server receives a first link request.
Step 202: The server determines a target request type of the first link request based on feature information of the first link request.
Step 203: According to the target request type of the first link request, the server determines the number of requests that are initiated by the source IP address within a first preset period and have a request type consistent with the target request type.
Step 204: If it is determined that the number of requests, that are initiated by the source IP address and have a request type consistent with the target request type, is greater than a preset threshold, the server determines the target attack type of the first link request based on the target request type, rejects the first link request, and adds the source IP address to a first collection.

It should be noted that the above Step 202 to Step 204 may be implemented using an auto-learn algorithm, details of which will be provided later.

In this way, the server may adopt different anti-attack strategies according to different request types, to achieve the objective of server anti-attack. This may effectively improve the anti-attack capability of the entire server and effectively reduce the risk caused by the server attack, thereby improving the service quality of the server, ensuring the consistency and stability of the services provided by the server, and enhancing the user experience of Internet access.

Specifically, in Step 201, the first link request may be a link request for a URL. That is, the first link request may be in the form: protocol name://host.domain name/path/filename. Further, the first link request may include a source IP address that initiates the request. Taking the system architecture shown in FIG. 1 as an example, the client device 102 may send a first link request to the server 101, where the first link request sent by the client device 102 may include the IP address of the client device 102.

Before performing Step 202, the server may first determine whether the source IP address is included in a first collection of IP addresses. If the source IP address is not in the first collection, Step 202 may be performed. If the source IP address is already in the first collection, the server may reject the first link request. Here, the first collection may be configured to store IP addresses that were denied access by the server.

In Step 202, the feature information of the first link request may include a large variety of content. For example, the feature information of the first link request may include request data, or a requesting rule, or requested content. Alternatively, the feature information of the first link request may further include the request data and the requesting rule, or the request data and the requested content, or the requesting rule and the requested content. Alternatively, the feature information of the first link request may further include the request data, the requesting rule, and the requested content. The specific feature information of the first link request is not limited by the present disclosure.

Further, since there are a variety of approaches to initiating a request towards the server, determining a request type may allow the adoption of the corresponding anti-attack strategy more specifically, to improve the anti-attack capability of the server. In view of this, the server may determine a target request type of the first link request based on the feature information of the first link request.

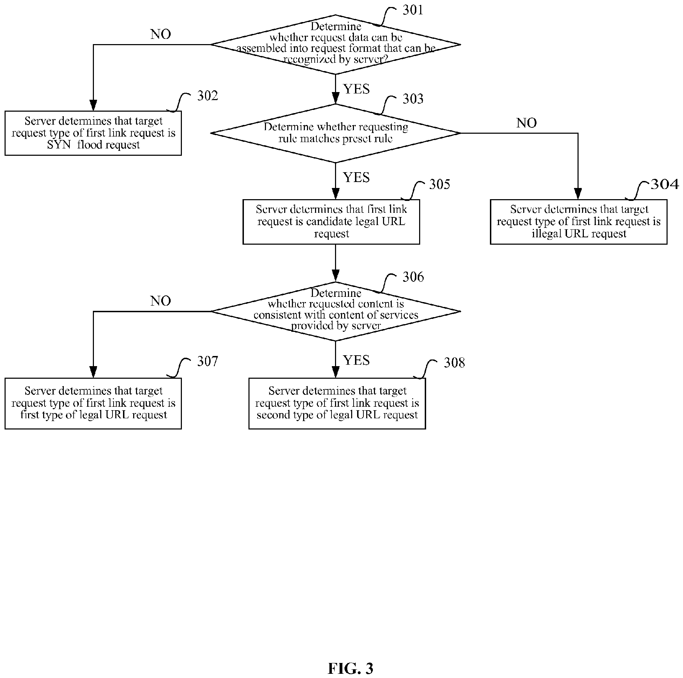

Specifically, the feature information of the first link request includes the request data, the requesting rule, and the requested content. FIG. 3 exemplarily shows a flowchart of a method for determining a target request type according to some embodiments of the present disclosure. As shown in FIG. 3, the method includes the following specific steps.

Step 301: The server determines, according to the request data of the first link request, whether the request data of the first link request can be assembled into a request format that can be recognized by the server. If the request data cannot be assembled into a request format that can be recognized by the server, proceed to Step 302. If the request data can be assembled into a request format that can be recognized by the server, proceed to Step 303.

In the embodiments of the present disclosure, consider that the services parsed by different servers are different. For example, if the server is configured to parse the live streaming service, it may be determined whether the request data of the first link request can be assembled into a request format that can be recognized by a server responsible for parsing the live streaming service. For another example, if the server is configured to parse the search service, it may be determined whether the request data of the first link request can be assembled into a request format that can be recognized by a server responsible for parsing the search service.

Further, a request format that can be recognized by the server may include an HTTP URL format that can be recognized by the server or an RTMP format that can be recognized by the server.

In one example, an auto-learn algorithm is used to implement the foregoing Step 301. If the first link request is a request in an HTTP URL format, since a standard HTTP request header generally consists of a request mode, a request URL, a request protocol, and a request header, which is ended with \r\n\r\n, the auto-learn algorithm may determine whether the request data of the first link request can be assembled into a complete HTTP header within a preset time period, and determine whether the first link request conforms to a standard HTTP protocol. If the request data can be assembled into a complete HTTP header and also conforms to the standard HTTP protocol, it is determined that the request data of the first link request can be assembled into an HTTP URL format that can be recognized by the server. If the request data cannot be assembled into a complete HTTP header or does not conform to a standard HTTP protocol, it is determined that the request data of the link request cannot be assembled into an HTTP URL format that can be recognized by the server.

If the first link request is a request in an RTMP format, since a standard RTMP request includes a first byte of 03 followed by 1536 bytes of request data, the auto-learn algorithm may determine whether a data amount of 1536 bytes is received within a preset time period after receiving the first byte. If the data amount of 1536 bytes is received within the preset time period, it is determined that the request data of the first link request can be assembled into an RTMP format that can be recognized by the server. If the data amount of 1536 bytes is not received within the preset time period, it is determined that the request data of the first link request cannot be assembled into an RTMP format that can be recognized by the server.

In the embodiments of the present disclosure, considering a large number of first link requests received by the server, in order to improve the efficiency of the server, the server may make a determination about the request data within a preset time period. If after the preset time period, the server still cannot determine whether the request data can be assembled into a request format that can be recognized by the server, it is considered that the request data cannot be assembled into a request format that can be recognized by the server.

Step 302: The server determines that the target request type of the first link request is an SYN flood request.

In the embodiments of the present disclosure, the characteristics of an SYN flood request is that the source IP address that initiates the request is reachable. If an SYN flood request is not taken care of correspondingly, the source IP address may transmit a large amount of garbage data to the server by initiating a flood attack, which consumes the network card resources of the server, thereby affecting the transmission of normal services.

Step 303: The server determines whether the requesting rule of the first link request satisfies a preset rule. If the requesting rule does not satisfy the preset rule, proceed to Step 304. If the requesting rule satisfies the preset rule, proceed to Step 305.

A preset rule may include various types of rules, such as a request domain name rule, refer rule, user-agent rule, request parameter rule, request policy rule (such as a timestamp anti-theft chain rule), etc., specific details of which are not limited by the present disclosure.

Further, in the case that the preset rule includes various types of rules, there are multiple ways for the server to determine whether the requesting rule of the first link request satisfies a preset rule. In one example, the server may determine whether the requesting rule of the first link request satisfies any of the above various types of rules. In another example, the server may also determine whether the requesting rule of the first link request is consistent with each of the above various types of rules, thereby improving the accuracy of the server in determining the target request type.

In one example, an auto-learn algorithm is used to implement Step 303. The auto-learn algorithm may be used to determine whether the requesting rule of the first link request satisfies a preset rule. For example, after the first link request is received, according to the preset rule(s), such as the service domain name rule (namely, a group of clients that may be supported by a server) or the request policy rule (namely, an algorithm that can be verified by a server), the auto-learn algorithm may be configured to determine whether the requesting rule of the first link request satisfies a preset rule. Taking that the request policy rule is an MD5 timestamp anti-theft chain rule as an example, after determining that a certain MD5 timestamp anti-theft chain rule is configured within a domain name, the auto-learn algorithm may determine whether a host of the first link request belongs to a collection of domain names served by the server. If the host of the first link request belongs to the collection of domain names served by the server, it is then determined whether the parameters included in the URL of the first link request or the parameter information of the HTTP request header satisfies the MD5 timestamp anti-theft chain rule. If the parameters included in the URL of the first link request or the parameter information of the HTTP request header satisfies the MD5 timestamp anti-theft chain rule, it is determined that the requesting rule of the first link request satisfies the preset rule.

Step 304: The server determines that the target request type of the first link request is an illegal URL request.

Step 305: The server determines that the target request type of the first link request is a candidate legal URL request.

Step 306: The server determines whether the requested content of the first link request is consistent with the content of services provided by the server. If the requested content of the first link request is inconsistent with the content of the services provided by the server, proceed to Step 307. If the requested content of the first link request is consistent with the content of the services provided by the server, proceed to Step 308.

As previously described, the server may include a large variety of types of servers. For example, the server may be a server for parsing the live streaming service. That is, the content of the services provided by the server is the content corresponding to the live streaming service. If the requested content of the first link request is other types of content (such as the content corresponding to the search service), it may be then considered that the requested content of the first link request is inconsistent with the content of the services provided by the server.

Specifically, taking a CDN server as an example, the content provided by the server (i.e., the CDN resources of the whole network) may refer to a collection of the resources owned by the edge servers and the resources owned by the central node server. After the request is determined to be a legal URL request, the auto-learn algorithm may be used to further determine whether the requested content of the legal URL request is a resource owned by the server. If the server does not own the requested content of the legal URL request, it is further determined, by using scheduled queries, whether the whole network owns the resource. If both the server and the whole network do not own the resource, it is determined that the CDN does not own the resource. That is, it may be considered that the requested content is inconsistent with the content of the services provided by the server.

Further, a threshold may be set for the requests requesting the resources, that are not owned by the server, within a time unit. If certain types of requests just query, at a regular interval, whether the CDN owns some resources, this activity is considered as a normal activity. However, if a certain type of requests continuously send a large number of requests, for the non-existing resource(s), within a time unit, these requests are considered as an attack activity.

Step 307: The server determines that the candidate legal URL request is a first type of legal URL request.

Step 308: The server determines that the candidate legal URL request is a second type of legal URL request.

It should be noted that: (1) the foregoing step numbers are merely one exemplary representation of the processing flow. The order/sequence of the steps is not specifically limited in the present disclosure. For example, in the above Step 301 and Step 303, the server may first determine whether the requesting rule of the first link request satisfies a preset rule, and then determine whether the request data of the first link request can be assembled into a request format that can be recognized by the server. (2) the method for determining the target request type provided by Step 301 to Step 308 is merely one example. In other possible examples, if the feature information of the first link request includes the request data, the server may determine whether the target request type of the first link request is an SYN flood request by determining whether the request data of the first link request can be assembled into a request format that can be recognized by the server. Alternatively, if the feature information of the first link request includes the request data and the requesting rule, the server may determine the target request type of the first link request by determining whether the request data of the first link request can be assembled into a request format that can be recognized by the server and determining whether the requested content of the first link request is consistent with the content of the services provided by the server.

In Step 203 and Step 204, for different target request types, different anti-attack strategies may be adopted, in the embodiments of the present disclosure, to improve the anti-attack capability of the server.

In one example, if the target request type is an SYN flood request, the server may determine the number of requests that are initiated by the source IP address within a first preset period and have a request type of an SYN flood request. Further, the server may determine whether the number of SYN flood requests initiated by the source IP address is greater than a first preset threshold. If the number of SYN flood requests initiated by the source IP address is greater than the first preset threshold, it may be determined that the target attack type of the first link request is an SYN flood attack. Accordingly, the first link request is rejected and the source IP address is added to the first collection. If the number of SYN flood requests initiated by the source IP address is less than or equal to the first preset threshold, only the first link request is rejected, but the source IP address is not added to the first collection. Here, the first collection may be configured to store IP addresses that the server denies access. That is, after receiving a second link request later, if the server determines that the IP address of the second link request is in the first collection, the server directly denies the access from this IP address without performing the process following the above Step 201.

It should be noted that the time length of the first preset period and the value of the first preset threshold may be determined by a person skilled in the art based on the experience and actual conditions, details of which are not specified by the present disclosure.

In another example, if the target request type is an illegal URL request, the server may determine the number of requests that are initiated by the source IP address within the first preset period and have a request type of an illegal URL request. Further, the server may determine whether the number of illegal URL requests initiated by the source IP address is greater than a second preset threshold. If the number of illegal URL requests initiated by the source IP address is greater than the second preset threshold, it may be determined that the target attack type of the first link request is an illegal URL attack. Accordingly, the first link request is rejected and the source IP address is added to the first collection. If the number of illegal URL requests initiated by the source IP address is less than or equal to the second preset threshold, only the first link request is rejected, but the source IP address is not added to the first collection.

It should be noted that the value of the second preset threshold may be determined by a person skilled in the art based on the experience and actual conditions, detail of which is not specified by the present disclosure.

In yet another example, if the target request type is a first type of legal URL request, the server may determine the number of requests that are initiated by the source IP address within the first preset period and have a request type of a first type of legal URL request. Further, the server may determine whether the number of first type of legal URL requests initiated by the source IP address is greater than a third preset threshold. If the number of first type of legal URL requests initiated by the source IP address is greater than the third preset threshold, it may be determined that the target attack type of the first link request is a legal URL attack. Accordingly, the first link request is rejected and the source IP address is added to the first collection. If the number of first type of legal URL requests initiated by the source IP address is less than or equal to the third preset threshold, only the first link request is rejected, but the source IP address is not added to the first collection.

It should be noted that the value of the third preset threshold may be determined by a person skilled in the art based on the experience and actual conditions, detail of which is not specified by the present disclosure.

In yet another example, if the target request type is a second type of legal URL request, the server may determine whether the source IP address is included in a second collection. If the source IP address is included in the second collection, the server may determine the number of second type of legal URL requests initiated by the source IP address within a second preset period. Further, the server may determine whether the number of second type of legal URL requests initiated by the source IP address within the second preset period is greater than the number of requests received after restriction. If the number of second type of legal URL requests initiated by the source IP address within the second preset period is greater than the number of requests received after the restriction, it may be determined that the target attack type of the first link request is a legal URL attack. If the number of second type of legal URL requests initiated by the source IP address within the second preset period is less than or equal to the number of requests received after the restriction, it is determined that the first link request is a legal request.

Further, if the source IP address is not included in the second collection, the server may determine the number of second type of legal URL requests initiated by the source IP address within a third preset period. The server then determines whether the number of second type of legal URL requests initiated by the source IP address within the third preset period is greater than a fourth preset threshold. If the number of second type of legal URL requests initiated by the source IP address within the third preset period is greater than the fourth preset threshold, the number of requests from the source IP address is restricted and the source IP address is added to the second collection. If the number of second type of legal URL requests initiated by the source IP address within the third preset period is less than or equal to the fourth preset threshold, the first link request is determined to be a legal request. Here, the second collection may be configured to store IP addresses restricted by the server and corresponding numbers of requests received after the restrictions. The third preset period is earlier than the second preset period.

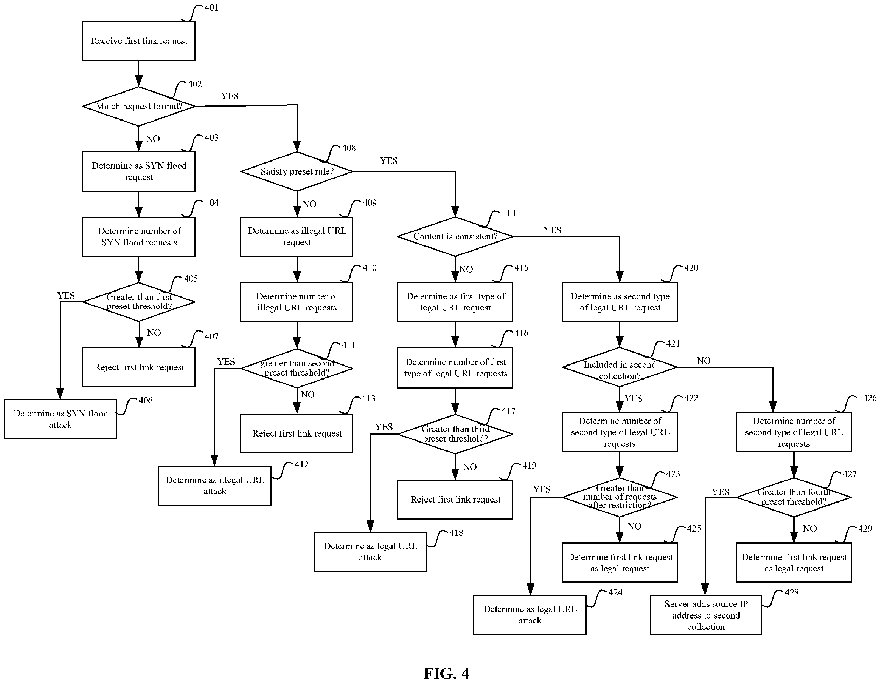

In order to more clearly describe the implementation of the foregoing method for implementing a server anti-attack, the process involved in the embodiments of the present disclosure will be described as a whole hereinafter with reference to FIG. 4. As shown in the figure, the following steps are included:
Step 401: The server receives a first link request.
Step 402: The server determines, according to request data of the first link request, whether the request data of the first link request can be assembled into a request format that can be recognized by the server. If the request data cannot be assembled into a request format that can be recognized by the server, proceed to Step 403. If the request data can be assembled into a request format that can be recognized by the server, proceed to Step 408.
Step 403: The server determines that the target request type of the first link request is an SYN flood request.
Step 404: The server may determine the number of requests that are initiated by the source IP address within a first preset period and have a request type of an SYN flood request.
Step 405: The server may determine whether the number of SYN flood requests is greater than a first preset threshold. If the number of SYN flood requests is greater than the first preset threshold, proceed to Step 406. If the number of SYN flood requests is less than or equal to the first preset threshold, proceed to Step 407.
Step 406: The server determines that the target attack type of the first link request is an SYN flood attack, rejects the first link request, and adds the source IP address to the first collection.
Step 407: The server only rejects the first link request, but does not add the source IP address to the first collection.
Step 408: The server determines whether the requesting rule of the first link request satisfies a preset rule. If the requesting rule does not satisfy a preset rule, proceed to Step 409. If the requesting rule satisfies a preset rule, proceed to Step 414.
Step 409: The server determines that the target request type of the first link request is an illegal URL request.
Step 410: The server may determine the number of requests that are initiated by the source IP address within the first preset period and have a request type of an illegal URL request.
Step 411: The server may determine whether the number of illegal URL requests is greater than a second preset threshold. If the number of illegal URL requests is greater than the second preset threshold, proceed to Step 412. If the number of illegal URL requests is less than or equal to the second preset threshold, proceed to Step 413.
Step 412: The server determines that the target attack type of the first link request is an illegal URL attack, rejects the first link request, and adds the source IP address to the first collection.
Step 413: The server only rejects the first link request, but does not add the source IP address to the first collection.
Step 414: The server determines that the target request type of the first link request is a candidate legal URL request, and determines whether the requested content of the first link request is consistent with the content of services provided by the server. If the requested content of the first link request is inconsistent with the content of the services provided by the server, proceed to Step 415. If the requested content of the first link request is consistent with the content of the services provided by the server, proceed to Step 420.
Step 415: The server determines that the target request type of the first link request is a first type of legal URL request.
Step 416: The server may determine the number of requests that are initiated by the source IP address within the first preset period and have a request type of a first type of legal URL request.
Step 417: The server may determine whether the number of first type of legal URL requests is greater than a third preset threshold. If the number of first type of legal URL requests is greater than the third preset threshold, proceed to Step 418. If the number of first type of legal URL requests is less than or equal to the third preset threshold, proceed to Step 419.
Step 418: The server determines that the target attack type of the first link request is a legal URL attack, rejects the first link request, and adds the source IP address to the first collection.
Step 419: The server only rejects the first link request, but does not add the source IP address to the first collection.
Step 420: The server determines that the target request type of the first link request is a second type of legal URL request.
Step 421: The server determines whether the source IP address is included in the second collection. If the source IP address is included in the second collection, proceed to Step 422. If the source IP address is not included in the second collection, proceed to Step 426.
Step 422: The server determines the number of second type of legal URL requests initiated by the source IP address within the second preset period.
Step 423: The server determines whether the number of second type of legal URL requests initiated by the source IP address within the second preset period is greater than the number of requests received after the restriction. If the number of second type of legal URL requests initiated by the source IP address within the second preset period is greater than the number of requests received after the restriction, proceed to Step 424. If the number of second type of legal URL requests initiated by the source IP address within the second preset period is less than or equal to the number of requests received after the restriction, proceed to Step 425.
Step 424: The server determines that the target attack type of the first link request is a legal URL attack, rejects the first link request, and adds the source IP address to the first collection.
Step 425: The server determines that the first link request is a legal request.
Step 426: The server determines the number of second type of legal URL requests initiated by the source IP address within a third preset period.
Step 427: The server determines whether the number of second type of legal URL requests initiated by the source IP address within the third preset period is greater than a fourth preset threshold. If the number of second type of legal URL requests initiated by the source IP address within the third preset period is greater than the fourth preset threshold, proceed to Step 428. If the number of second type of legal URL requests initiated by the source IP address within the third preset period is less than or equal to the fourth preset threshold, proceed to Step 429.
Step 428: The server restricts the number of requests from the source IP address, and adds the source IP address to the second collection.
Step 429: The server determines that the first link request is a legal request.

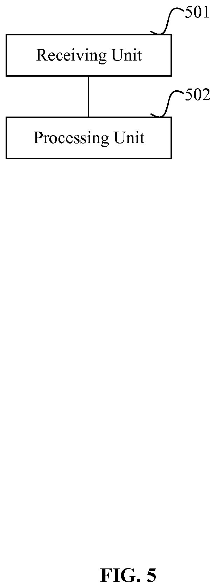

Based on the similar inventive concept, FIG. 5 exemplarily shows a schematic structural diagram of an apparatus for implementing a server anti-attack according to the embodiments of the present disclosure. As shown in FIG. 5, the apparatus includes a receiving unit 501 and a processing unit 502, where,
the receiving unit 501 is configured to receive a first link request, where the first link request includes a source IP address that initiates the request; and
the processing unit 502 is configured to determine a target request type of the first link request based on feature information of the first link request, where the feature information of the first link request includes at least one of request data, a requesting rule, and requested content; determine the number of requests that are initiated by the source IP address within a first preset period and have a request type consistent with the target request type based on the target request type of the first link request; and if it is determined that the number of requests, that are initiated by the source IP address and have a request type consistent with the target request type, is greater than a preset threshold, determine a target attack type of the first link request based on the target request type, reject the first link request, and add the source IP address to a first collection, where the first collection is configured to store IP addresses that the server denies access.

In one possible implementation, the processing unit 502 is specifically configured to:
if it is determined, based on the request data of the first link request, that the request data cannot be assembled into a request format that can be recognized by the server, determine that the target request type of the first link request is an SYN flood request; determine the number of requests that are initiated by the source IP address within the first preset period and have a request type of a SYN flood request; and if it is determined that the number of SYN flood requests initiated by the source IP address is greater than a first preset threshold, determine that the target attack type of the first link request is an SYN flood attack.

In one possible implementation, the processing unit 502 is specifically configured to:
if it is determined, based on the request data and the requesting rule of the first link request, that the request data can be assembled into a request format that can be recognized by the server but the requesting rule does not satisfy a preset rule, determine that the target request type of the first link request is an illegal URL request; determine the number of requests that are initiated by the source IP address within the first preset period and have a request type of an illegal URL request; and if it is determined that the number of illegal URL requests initiated by the source IP address is greater than a second preset threshold, determine that the target attack type of the first link request is an illegal URL attack.

In one possible implementation, the processing unit 502 is specifically configured to:
if it is determined, based on the request data and the requesting rule of the first link request, that the request data can be assembled into a request format that can be recognized by the server and the requesting rule satisfies a preset rule, determine that the target request type of the first link request is a candidate legal URL request; if it is determined, based on the requested content of the first link request, that the requested content is inconsistent with content of services provided by the server, determine that the candidate legal URL request is a first type of legal URL request; determine the number of requests that are initiated by the source IP address within the first preset period and that have a request type of a first type of legal URL request; and if it is determined that the number of first type of legal URL requests initiated by the source address is greater than a third preset threshold, determine that the target attack type of the first link request is a legal URL attack.

In one possible implementation, the processing unit 502 is further configured to:
if it is determined that the requested content is consistent with the content of services provided by the server, determine that the candidate legal URL request is a second type of legal URL request; if it is determined that the source IP address is included in a second collection, determine the number of second type of legal URL requests initiated by the source IP address within a second preset period, where the second collection is to store IP addresses restricted by the server and corresponding numbers of requests after restrictions; and if it is determined that the number of second type of legal URL requests initiated by the source IP address within the second preset period is greater than the number of requests received after a restriction, determine that the target attack type of the first link request is a legal URL attack, reject the first link request, and add the source IP address to the first collection.

In one possible implementation, the processing unit 502 is further configured to:
if it is determined that the number of second type of legal URL requests initiated by the source IP address within the second preset period is less than or equal to the number of requests received after the restriction, determine that the first link request is a legal request.

In one possible implementation, the processing unit 502 is further configured to:
if it is determined that the source IP address is not included in the second collection, determine the number of second type of legal URL requests initiated by the source IP address within a third preset period; if it is determined that the number of second type of legal URL requests initiated by the source IP address within the third preset period is greater than a fourth preset threshold, restrict the number of requests from the source IP address and add the source IP address to the second collection, where the third preset period is earlier than the second preset period; and if it is determined that the number of second type of legal URL requests initiated by the source IP address within the third preset period is less than or equal to the fourth preset threshold, determine that the first link request is a legal request.

In one possible implementation, after receiving the first link request and before determining the target request type of the first link request, the processing unit 502 is further configured to:
determine that the source IP address is not included in the first collection.

The embodiments of the present disclosure further provide an apparatus. The apparatus includes the functionality of implementing the above-described methods for implementing a server anti-attack. The functionality may take the form of implementation of hardware executing corresponding software. In one possible design, the apparatus includes a processor, a transceiver, and a memory. The memory is configured to store instructions executed by a computer. The transceiver is configured to enable the communication of the apparatus with other communication entities. The processor connects with the memory via a bus. When the apparatus is running, the processor executes the computer-executable instructions stored by the memory, to cause the apparatus to implement the methods for implementing a server anti-attack described above.

The embodiments of the present disclosure further provide a computer-readable storage medium. The computer-readable storage medium stores software programs that, when read and executed by one or more processors, implement the methods for implementing a server anti-attack described in the above various possible implementations.

The embodiments of the present disclosure further provide a computer program product comprising instructions that, when executed on a computer, cause the computer to implement the methods for implementing a server anti-attack described in the above various possible implementations.

Those skilled in the art will appreciate that embodiments of the present disclosure may be provided as a method, system, or computer program product. Accordingly, the present disclosure may take the form of an entire hardware embodiment, an entire software embodiment, or a combination of software and hardware embodiment. In addition, the present disclosure may take the form of a computer program product executing on one or more computer-readable storage media (including but not limited to disk storage, CD-ROM, optical storage, etc.) including computer executable program code.

The present disclosure has been described with reference to the flowcharts and/or block diagrams of methods, apparatuses (systems), and computer program products according to the embodiments of the present disclosure. It is to be understood that each individual flow of the flowcharts and/or block of the block diagrams, or a combination thereof, may be implemented by computer program instructions. These computer program instructions may be provided to a processor of a general purpose computer, specialized computer, embedded processor, or other programmable data processing device to produce a machine, which allows a production of an apparatus for implementing the functions specified by one or more flows of the flowcharts and/or one or more blocks of the block diagrams through executing the instructions by a processor of a computer or another programmable data processing device.

These computer program instructions may also be stored in a computer-readable memory that can direct a computer or another programmable data processing device to function in a specified manner, which allows a product, containing an instruction apparatus, to be produced by the instructions stored in the computer-readable memory. The instruction apparatus implements the functions specified in one or more flows of the flowcharts and/or one or more blocks of the block diagrams.

These computer program instructions may also be loaded onto a computer or another programmable data processing device, to allow a series of operational steps to be implemented on the computer or another programmable data processing device to produce a computer implemented process. Accordingly, the instructions implemented on the computer or another programmable data processing device provide processes for achieving the functions specified in one or more flows of the flowcharts and/or one or more blocks of the block diagrams.

## Claims

1. A method for implementing a server anti-attack, comprising:
receiving (201), by a server, a first link request from a client device directly, wherein the first link request includes a source IP address that initiates the first link request;
determining (202), by the server, a target request type of the first link request based on feature information of the first link request, wherein the feature information of the first link request includes at least one of request data, a requesting rule, and requested content, and the target request type includes an SYN flood request, an illegal URL request, or a legal URL request;
determining (203), by the server, the number of requests that are initiated by the source IP address within a first preset period and have a request type consistent with the target request type based on the target request type of the first link request; and
if it is determined that the number of requests, that are initiated by the source IP address and have a request type consistent with the target request type, is greater than a preset threshold corresponding to the target request type, determining (204), by the server, a target attack type of the first link request based on the target request type, rejecting the first link request, and adding the source IP address to a first collection, wherein the first collection is configured to store IP addresses that the server denies access.

2. The method according to claim 1, wherein:
determining, by the server, the target request type of the first link request based on the feature information of the first link request further includes:
if it is determined, based on the request data of the first link request, that the request data cannot be assembled into a request format that can be recognized by the server, determining (302; 402, 403), by the server, that the target request type of the first link request is the SYN flood request;
determining, by the server, the number of requests that are initiated by the source IP address within the first preset period and have a request type consistent with the target request type further includes:
determining (404), by the server, the number of requests that are initiated by the source IP address within the first preset period and have a request type of the SYN flood request; and
if it is determined that the number of requests, that are initiated by the source IP address and have a request type consistent with the target request type, is greater than the preset threshold, determining, by the server, the target attack type of the first link request based on the target request type further includes:
if it is determined that the number of SYN flood requests initiated by the source IP address is greater than a first preset threshold, determining (405, 406), by the server, that the target attack type of the first link request is an SYN flood attack.

3. The method according to claim 1, wherein:
determining, by the server, the target request type of the first link request based on the feature information of the first link request further includes:
if it is determined, based on the request data and the requesting rule of the first link request, that the request data can be assembled into a request format that can be recognized by the server but the requesting rule does not satisfy a preset rule, determining (304; 408, 409), by the server, that the target request type of the first link request is the illegal URL request;
determining, by the server, the number of requests that are initiated by the source IP address within the first preset period and have a request type consistent with the target request type further includes:
determining (410), by the server, the number of requests that are initiated by the source IP address within the first preset period and have a request type of the illegal URL request; and
if it is determined that the number of requests, that are initiated by the source IP address and have a request type consistent with the target request type, is greater than the preset threshold, determining, by the server, the target attack type of the first link request based on the target request type further includes:
if it is determined that the number of illegal URL requests initiated by the source IP address is greater than a second preset threshold, determining (411, 412), by the server, that the target attack type of the first link request is an illegal URL attack.

4. The method according to claim 1, wherein determining, by the server, the target request type of the first link request based on the feature information of the first link request further includes:
if it is determined, based on the request data and the requesting rule of the first link request, that the request data can be assembled into a request format that can be recognized by the server and the requesting rule satisfies a preset rule, determining (305), by the server, that the target request type of the first link request is a candidate legal URL request, and
if it is determined, based on the requested content of the first link request, that the requested content is inconsistent with content of services provided by the server, determining (306, 307; 414, 415), by the server, that the candidate legal URL request is a first type of the legal URL request;
determining, by the server, the number of requests that are initiated by the source IP address within the first preset period and have a request type consistent with the target request type further includes:
determining (416), by the server, the number of requests that are initiated by the source IP address within the first preset period and have a request type of a first type of the legal URL request; and
if it is determined that the number of requests, that are initiated by the source IP address and have a request type consistent with the target request type, is greater than the preset threshold, determining, by the server, the target attack type of the first link request based on the target request type further includes:
if it is determined that the number of first type of legal URL requests is greater than a third preset threshold, determining (417, 418), by the server, that the target attack type of the first link request is a legal URL attack.

5. The method according to claim 4, further comprising:
if it is determined that the requested content is consistent with the content of services provided by the server, determining (306, 308; 420), by the server, that the candidate legal URL request is a second type of the legal URL request;
if it is determined that the source IP address is included in a second collection, determining (421, 422), by the server, the number of second type of legal URL requests initiated by the source IP address within a second preset period, wherein the second collection is configured to store IP addresses restricted by the server and corresponding numbers of requests received after restrictions; and
if it is determined that the number of second type of legal URL requests initiated by the source IP address within the second preset period is greater than the number of requests received after a restriction, determining (423, 424), by the server, that the target attack type of the first link request is a legal URL attack, rejecting the first link request, and adding the source IP address to the first collection.

6. The method according to claim 5, further comprising:
if it is determined that the number of second type of legal URL requests initiated by the source IP address within the second preset period is less than or equal to the number of requests received after the restriction, determining (423, 425), by the server, that the first link request is a legal request.

7. The method according to claim 5, further comprising:
if it is determined that the source IP address is not included in the second collection, determining (421, 426), by the server, the number of second type of legal URL requests initiated by the source IP address within a third preset period;
if it is determined that the number of second type of legal URL requests initiated by the source IP address within the third preset period is greater than a fourth preset threshold, restricting, by the server, the number of requests from the source IP address and adding (427, 428) the source IP address to the second collection, wherein the third preset period is earlier than the second preset period; and
if it is determined that the number of second type of legal URL requests initiated by the source IP address within the third preset period is less than or equal to the fourth preset threshold, determining (427, 429), by the server, that the first link request is a legal request.

8. The method according to any one of claims 1 to 7, wherein, after receiving the first link request and before determining the target request type of the first link request, the method further includes:
determining, by the server, that the source IP address is not included in the first collection.

9. An apparatus for implementing a server anti-attack, comprising:
a receiving unit that is configured to directly receive a first link request from a client device, wherein the first link request includes a source IP address that initiates the first link request; and
a processing unit that is configured to:
determine a target request type of the first link request based on feature information of the first link request, wherein the feature information of the first link request includes at least one of request data, a requesting rule, and requested content, and the target request type comprises an SYN flood request, an illegal URL request, or a legal URL request;
determine the number of requests that are initiated by the source IP address within a first preset period and have a request type consistent with the target request type based on the target request type of the first link request, and
if it is determined that the number of requests, that are initiated by the source IP address and have a request type consistent with the target request type, is greater than a preset threshold corresponding to the target request type, determine a target attack type of the first link request based on the target request type, reject the first link request, and add the source IP address to a first collection, wherein the first collection is configured to store IP addresses that the server denies access.

10. The apparatus according to claim 9, wherein the processing unit is further configured to:
if it is determined, based on the request data of the first link request, that the request data cannot be assembled into a request format that can be recognized by the server, determine that the target request type of the first link request is the SYN flood request;
determine the number of requests that are initiated by the source IP address within the first preset period and have a request type of the SYN flood request; and
if it is determined that the number of SYN flood requests initiated by the source IP address is greater than a first preset threshold, determine that the target attack type of the first link request is an SYN flood attack.

11. The apparatus according to claim 9, wherein the processing unit is further configured to:
if it is determined, based on the request data and the requesting rule of the first link request, that the request data can be assembled into a request format that can be recognized by the server but the requesting rule does not satisfy a preset rule, determine that the target request type of the first link request is the illegal URL request;
determine the number of requests that are initiated by the source IP address within the first preset period and have a request type of the illegal URL request; and
if it is determined that the number of illegal URL requests initiated by the source IP address is greater than a second preset threshold, determine that the target attack type of the first link request is an illegal URL attack.

12. The apparatus according to claim 9, wherein the processing unit is further configured to:
if it is determined, based on the request data and the requesting rule of the first link request, that the request data can be assembled into a request format that can be recognized by the server and the requesting rule satisfies a preset rule, determine that the target request type of the first link request is a candidate legal URL request;
if it is determined, based on the requested content of the first link request, that the requested content is inconsistent with content of services provided by the server, determine that the candidate legal URL request is a first type of the legal URL request;
determine the number of requests that are initiated by the source IP address within the first preset period and that have a request type of a first type of the legal URL request; and
if it is determined that the number of first type of legal URL requests initiated by the source address is greater than a third preset threshold, determine that the target attack type of the first link request is a legal URL attack.

13. The apparatus according to claim 12, wherein the processing unit is further configured to:
if it is determined that the requested content is consistent with the content of services provided by the server, determine that the candidate legal URL request is a second type of the legal URL request;
if it is determined that the source IP address is included in a second collection, determine the number of second type of legal URL requests initiated by the source IP address within a second preset period, wherein the second collection is to store IP addresses restricted by the server and corresponding numbers of requests after restrictions; and
if it is determined that the number of second type of legal URL requests initiated by the source IP address within the second preset period is greater than the number of requests received after a restriction, determine that the target attack type of the first link request is a legal URL attack, reject the first link request, and add the source IP address to the first collection.

14. The apparatus according to claim 13, wherein the processing unit is further configured to:
if it is determined that the number of second type of legal URL requests initiated by the source IP address within the second preset period is less than or equal to the number of requests received after the restriction, determine that the first link request is a legal request.

15. The apparatus according to claim 13, wherein the processing unit is further configured to:
if it is determined that the source IP address is not included in the second collection, determine the number of second type of legal URL requests initiated by the source IP address within a third preset period;
if it is determined that the number of second type of legal URL requests initiated by the source IP address within the third preset period is greater than a fourth preset threshold, restrict the number of requests from the source IP address and add the source IP address to the second collection, wherein the third preset period is earlier than the second preset period; and
if it is determined that the number of second type of legal URL requests initiated by the source IP address within the third preset period is less than or equal to the fourth preset threshold, determine that the first link request is a legal request.

## Patentansprüche

1. Eine Methode zur Implementierung eines Server-Antiangriffs der Folgendes umfasst:
Empfang (201) durch einen Server einer ersten, direkt von einer Kundenvorrichtung stammenden Linkanfrage, wobei die erste Linkanfrage eine Quell-IP-Adresse einschliesst, die die erste Linkanfrage startet;
Bestimmung (202) durch den Server eines Zielanfragetyps der ersten Linkanfrage basierend auf Eigenschaftsinformation der ersten LInkanfrage, wobei die Eigenschaftsinformation der ersten Linkanfrage mindestens ein Element von folgenden einschliesst: Anfragedaten, eine Anfrageregel und den angeforderten Inhalt, und wobei der Zielanfragetyp eine SYN-Flooding-Anfrage, eine illegale URL-Anfrage oder eine legale URL-Anfrage einschliesst;
Bestimmung (203) durch den Server der Anzahl von Anfragen, die durch die Quell-IP-Adresse gestartet wurden, innerhalb einer ersten voreingestellten Zeitspanne und die einen Anfragetyp haben, der mit dem Zielanfragetyp übereinstimmt basierend auf dem Zielanfragetyp der ersten Linkanfrage; und
wenn festgestellt wird, dass eine Anzahl von Anfragen, die durch die Quelladresse gestartet werden und einen Anfragetyp aufweisen, der mit dem Zielanfragetyp übereinstimmt, grösser ist als der dem Zielanfragetyp entsprechende voreingestellte Schwellenwert, Bestimmung (204) durch den Server eines Zielangriffstyps des ersten angeforderten Links basierend auf dem Zielanfragetyp, Zurückweisung der ersten Linkanfrage und Hinzufügen der Quell-IP-Adresse zu einer ersten Sammlung, wobei die Sammlung konfiguriert ist, um IP-Adressen zu speichern, zu denen der Server den Zugang verweigert.

2. Die Methode gemäss Anspruch 1, bei der:
Die Bestimmung durch den Server des Zielanfragetyps der ersten Linkanfrage basierend auf der Eigenschaftsinformation der ersten Linkanfrage weiter Folgendes einschliesst:
Wenn festgestellt wird, dass basierend auf den Anfragedaten der ersten Linkanfrage, die Anfragedaten nicht in einem Anfrageformat zusammengestellt werden können, das durch den Server erkennbar ist, Bestimmung (302; 402, 403) durch den Server, dass der Zielanfragetyp der ersten Linkanfrage die SYN-Flooding-Anfrage ist;
Bestimmung durch den Server der Anzahl an Anfragen, die durch die Quell-IP-Adresse innerhalb der voreingestellten Zeitspanne gestartet werden und einen Anfragetyp aufweisen, der mit dem Zielanfragetyp übereinstimmt, die weiter Folgendes einschliesst:
Bestimmung (404) durch den Server der Anzahl an Anfragen, die durch die Quell-IP-Adresse innerhalb der voreingestellten Zeitspanne gestartet werden und einen Anfragetyp der SYN-Flooding-Anfrage aufweisen; und
wenn festgestellt wird, dass die Anzahl an Anfragen, die durch die Quell-IP-Adresse gestartet werden und einen Anfragetyp aufweisen, der mit dem Zielanfragetyp übereinstimmt, grösser ist als der voreingestellte Schwellwert, Bestimmung duch den Server des Zielangrifftyps der ersten Linkanfrage basierend auf dem Zielanfragetyp, die weiter Folgendes einschliesst:
Wenn festgestellt wird, dass die Anzahl der durch die Quell-IP-Adresse eigeleiteten SYN-Flooding-Anfragen grösser ist als ein erster vorgeingestellter Schwellwert, Bestimmung (405, 406) durch den Server, dass der Zielangriffstyp der ersten Link-Anfrage ein SYN-Flooding-Angriff ist.

3. Die Methode gemäss Anspruch 1, bei der:
Die Bestimmung durch den Server des Zielanfragetyps der ersten Linkanfrage basierend auf der Eigenschaftsinformation der ersten Linkanfrage weiter Folgendes einschliesst:
Wenn basierend auf den Anfragedaten und der Anfrageregel der ersten Linkanfrage festgestellt wird, dass die Anfragedaten in einem Anfrageformat zusammengefasst werden können, das durch den Server erkennbar ist, aber die Anfrageregel nicht die voreingestellte Regel erfüllt, Bestimmung (304; 408, 409) durch den Server, dass der Zielanfragetyp der ersten Linkanfrage die illegale URL-Anfrage ist;
Bestimmung durch den Server der Anzahl an Anfragen, die durch die Quell-IP-Adresse innerhalb des ersten voreingestellten Zeitraumes gestartet wurden und einen Anfragetyp aufweisen, der mit dem Zielanfragetyp übereinstimmt, die weiter Folgendes einschliesst:
Bestimmung (410) durch den Server der Anzahl an Anfragen, die durch die Quell-IP-Adresse innerhalb des ersten voreingestellten Zeitraums gestartet wurden und einen Anfragetyp der illegalen URL-Anfrage aufweisen; und
wenn festgestellt wird, dass die Anzahl an Anfragen, die durch die Quell-IP-Adresse gestartet wuden und einen Anfragetyp aufweisen, der mit dem Zielanfragetyp übereinstimmt, grösser ist als der voreingestellte Schwellwert, schliesst die Bestimmung durch den Server des Zielangrifftyps der ersten Linkanfrage basierend auf dem Zielanfragetyp weiter Folgendes ein:
wenn festgestellt wird, dass die Anzahl an illegalen URL-Anfrage, die durch die Quell-IP-Adresse gestartet wurden, grösser ist als der zweite voreingestellte Schwellwert, Bestimmung (411, 412) durch den Server, dass der Zielangriffstyp der ersten Linkanfrage ein illegaler URL-Angriff ist.

4. Die Methode gemäss Anspruch 1, bei der die Bestimmung durch den Server des Zielanfragetyps der ersten Linkanfrage basiered auf der Eigenschaftsinformation der ersten Linkanfrage weiter Folgendes einschliesst:
Wenn festgestellt wird, dass, basierend auf den Anfragedaten und der Anfrageregel der ersten Linkanfrage, die Anfragedaten in einem Anfrageformat zusammengefasst werden können, das durch den Server erkennbar ist, und die Anfrageregel eine voreingestellte Regel erfüllt, Bestimmung (305) durch den Server, dass der Zielanfragetyp der ersten Linkanfrage eine infrage kommende, legale URL-Anfrage ist, und
wenn basierend auf dem angeforderten Inhalt der ersten Linkanfrage festgestellt wird, dass der angefragte Inhalt mit dem Inhalt der durch den Server bereitgestellten Dienstleistungen unvereinbar ist, Bestimmung (306, 307; 414, 415) durch den Server, dass die infrage kommende, legale URL-Anfrage ein erster Typ der legalen URL-Anfrage ist;
Bestimmung durch den Server der Anzahl an Anfragen, die durch die Quell-IP-Adresse innerhalb des ersten voreingestellten Zeitraums gestartet werden und einen Anfragetyp aufweisen, der mit dem Zielanfragetyp übereinstimmt, die weiter Folgendes einschliesst:
Bestimmung (416) durch den Server der Anzahl an Anfragen, die durch die Quell-IP-Adresse innerhalb des ersten voreingestellten Zeitraums gestartet wurden und einen Anfragetyp des ersten Typs der legalen URL-Anfrage aufweisen; und
wenn festgestellt wird, dass die Anzahl an Anfragen, die durch die Quell-IP-Adresse gestartet wurden und einen Anfragetyp aufweisen, der mit dem Zielanfragetyp übereinstimmt, grösser ist als der voreingestellte Schwellwert, Bestimmung durch den Server, des Zielangrifftyps der ersten Linkanfrage, basierend auf dem Zielanfragetyp, die weiter Folgendes einschliesst:
wenn festgestellt wird, dass die Anzahl des ersten Typs von legalen URL-Anfragen grösser ist als ein dritter voreingestellter Schwellwert, Bestimmung (417, 418) durch den Server, dass der Zielangriffstyp der ersten Linkanfrage ein legaler URL-Angriff ist.

5. Die Methode gemäss Anspruch 4, die weiter Folgendes umfasst:
Wenn festgestellt wird, dass der Anfrageinhalt mit dem Inhalt der durch den Server bereitgestellten Dienstleistungen übereinstimmt, bestimmt (306, 308; 420) der Server, dass die infrage kommende, legale URL-Anfrage ein zweiter Typ der legalen URL-Anfrage ist;
wenn festgestellt wird, dass die Quell-IP-Adresse in einer zweiten Sammlung eingeschlossen ist, bestimmt (421, 422) der Server die Anzahl des zweiten Typs von legalen URL-Anfragen, die durch die Quell-IP-Adresse innerhalb einer zweiten, voreingestellten Zeitspanne gestartet wurden, wobei die zweite Sammlung konfiguriert ist, um die durch den Server eingeschränkten IP-Adressen sowie die entsprechenden Anzahlen von nach der Einschränkung erhaltenen Anfragen zu speichern; und
wenn festgestellt wird, dass die Anzahl des zweiten Typs der legalen durch die Quell-IP-Adresse innerhalb einer zweiten, voreingestellten Zeitspanne gestarteten legalen URL-Anfragen grösser ist als die Anzahl der nach einer Einschränkung empfangenen Anfragen, bestimmt (423, 424) der Server, dass der Zielangriffstyp der ersten Linkanfrage ein legaler URL-Angriff ist, die erste Linkanfrage zurückgewiesen wird und die Quell-IP-Adresse zu der ersten Sammlung hinzugefügt wird.

6. Die Methode gemäss Anspruch 5, die weiter Folgendes umfasst:
Wenn festgestellt wird, dass die Anzahl an legalen URL-Anfragen vom zweiten Typ, die durch die Quell-IP-Adresse innerhalb der zweiten, voreingestellten Zeitspanne gestartet wurden, geringer oder gleich der Anzahl von Anfragen ist, die nach der Einschränkung empfangen wurden, bestimmt (423, 425) der Server, dass die erste Linkanfrage eine legale Anfrage ist.

7. Die Methode gemäss Anspruch 5, die weiter Folgendes umfasst:
Wenn festgestellt wird, dass die Quell-IP-Adresse nicht in der zweiten Sammlung eingeschlossen ist, bestimmt (421, 426) der Server die Anzahl an legalen URL-Anfragen des zweiten Typs, die durch die Quell-IP-Adresse innerhalb einer dritten, voreingestellten Zeitspanne gestartet wurden;
wenn festgestellt wird, dass die Anzahl an legalen URL-Anfragen vom zweiten Typ, die durch die Quell-IP-Adresse innerhalb der dritten, voreingestellten Zeitspanne gestartet wurden, grösser ist als der vierte, voreingestellte Schwellwert, schränkt der Server die Anfrageanzahl von der Quell-IP-Adresse ein und fügt (427, 428) die Quell-IP-Adresse zu der zweiten Sammlung hinzu, wobei die dritte, voreingestellte Zeitspanne früher vorkommt als die zweite, voreingestellte Zeitspanne; und
wenn festgestellt wird, dass die Anzahl der legalen URL-Anfragen vom zweiten Typ, die durch die Quell-IP-Adresse innerhalb der dritten, voreingestellten Zeitspanne gestartet wurden, geringer ist als der oder gleich dem vierten, voreingestellten Schwellwert, bestimmt (427, 429) der Server, dass die erste Linkanfrage eine legale Anfrage ist.

8. Die Methode übereinstimmend mit irgendeinem der Ansprüche 1 bis 7, bei der, nach Empfang der ersten Linkanfrage und bevor der Zielanfragetyp der ersten Linkanfrage bestimmt wird, die Methode weiter Folgendes einschliesst:
Bestimmung durch den Server, dass die Quell-IP-Adresse nicht in der ersten Sammlung eingeschlossen ist.

9. Eine Vorrichtung zur Implentierung eines Server-Antiangriffs, die Folgendes umfasst: Eine Empfangseinheit, die konfiguriert ist, um direkt eine erste Linkanfrage von einem Kundengerät zu empfangen, wobei die erste Linkanfrage eine Quell-IP-Adresse eingschliesst, die die erste Linkanfrage startet; und
eine Verarbeitungseinheit, die konfiguriert ist um:
einen Zielanfragetyp der ersten Linkanfrage basierend auf Eigenschaftsinformation der ersten Linkanfrage zu bestimmen, wobei die Eigenschaftsinformation der ersten Linkanfrage mindestens eins folgender Elemente einschliesst: Anfragedaten, eine Anfrageregel und den angeforderten Inhalt, und der Zielanfragetyp eine SYN-Flooding-Anfrage, eine illegale URL-Anfrage oder eine legale URL-Anfrage umfasst;
die Anzahl an Anfragen zu bestimmen, die durch die Quell-IP-Adresse innerhalb einer ersten voreingestellten Zeitspanne gestartet wurden und einen Anfragetyp aufweisen, der dem Zielanfragetyp basierend auf dem Zielanfragetyp der ersten Linkanfrage entspricht und
wenn festgestellt wird, dass die Anzahl an Anfragen, die durch die Quell-IP-Adresse gestartet wurden und einen Anfragetyp haben, der dem Zielanfragetyp entspricht, grösser ist als ein voreingestellter, dem Zielanfragetyp entsprechender Schwellwert, einen Zielangriffstyp der ersten Linkanfrage basierend auf dem Zielanfragetyp zu bestimmen, die erste Linkanfrage zurückzuweisen und die Quell-IP-Adresse zu einer ersten Sammlung hinzuzufügen, wobei die erste Sammlung konfiguriert ist, um IP-Adressen zu speichern, zu denen der Server den Zugriff verweigert.

10. Die Vorrichtung gemäss Anspruch 9, bei der die Verarbeitungseinheit weiter konfiguriert ist, um:
Wenn basierend auf den Anfragedaten der ersten Linkanfrage festgestellt wird, dass die Anfragedaten nicht ein einem Anfrageformat zusammengefasst werden können, das durch den Server erkennbar ist, zu bestimmen, dass der Zielanfragetyp der ersten Linkanfrage die SYN-Flooding-Anfrage ist;
die Anzahl an Anfragen zu bestimmen, die durch die Quell-IP-Adresse innerhalb der ersten, voreingestellten Zeitspanne eingleitet wurden und einen Anfragetyp der SYN-Flooding-Anfrage aufweisen; und
wenn festgestellt wird, dass die Anzahl der durch die Quell-IP-Adresse gestarteten SYN-Flooding-Anfragen grösser ist als ein erster, voreingestellter Schwellwert, zu bestimmen, dass der Zielangriffstyp der ersten Linkanfrage ein SYN-Flooding-Angriff ist.

11. Die Vorrichtung gemäss Anspruch 9, bei der die Verarbeitungseinheit weiter konfiguriert ist, um:
Wenn basierend auf den Anfragedaten und der Anfrageregel der ersten Linkanfrage festgestellt wird, dass die Anfragedaten in einem Anfrageformat zusammengefasst werden können, das durch einen Server erkennbar ist, die Anfrageregel aber keine voreingestellte Regel erfüllt, zu bestimmen, dass der Zielanfragetyp der ersten Linkanfrage die illegale URL-Anfrage ist
die Anzahl an Anfragen zu bestimmen, die durch die Quell-IP-Adresse innerhalb der ersten voreingestellten Zeitspanne gestartet wurden und einen Anfragetyp der illegalen URL-Anfrage aufweisen; und
zu bestimmen, dass der Zielangriffstyp der ersten Linkanfrage ein illegaler URL-Angriff ist, wenn festgestellt wird, dass die Anzahl der durch die Quell-IP-Adresse gestarteten illegalen URL-Anfragen grösser ist als der zweite, voreingestellte Schwellwert.

12. Die Vorrichtung gemäss Anspruch 9, bei der die Verarbeitungseinheit weiter konfiguriert ist, um:
Zu bestimmen, dass der Zielanfragetyp der ersten Linkanfrage eine infrage kommende, legale URL-Anfrage ist, wenn basierend auf den Anfragedaten und der Anfrageregel der ersten Linkanfrage festgestellt wird, dass die Anfragedaten in einem Anfrageformat zusammengestellt werden können, das durch den Server erkennbar ist, und die Anfrageregel eine voreingestellte Regel erfüllt;
zu bestimmen, dass die infrage kommende, legale URL-Anfrage ein erster Typ der legalen URL-Anfrage ist, wenn, basierend auf dem angefragten Inhalt der ersten Linkanfrage, festgestellt wird, dass der angefragte Inhalt mit dem Inhalt der durch den Server bereitgestellten Dienstleistungen unvereinbar ist;
die Anzahl von Anfragen zu bestimmen, die durch die Quell-IP-Adresse innerhalb der ersten, voreingestellten Zeitspanne eingeleitet werden und die einen Anfragetyp eines ersten Typ der legalen URL-Anfrage aufweisen; und
zu bestimmen, dass der Zielangriffstyp der ersten Linkanfrage ein legaler URL-Angriff ist, wenn festgestellt wird, dass die Anzahl des ersten Typs der legalen URL-Anfragen, die durch die Quelladresse eingeleitet werden, grösser ist, als ein dritter, voreingestellter Schwellwert.

13. Die Vorrichtung gemäss Anspruch 12, bei der die Verarbeitungseinheit weiter konfiguriert ist, um:
Zu bestimmen, dass die legale Kandidaten-URL-Anroderung ein zweiter Typ der legalen URL-Anfrage ist, wenn festgestellt wird, dass der angefragte Inhalt mit dem Inhalt der durch den Server bereitgestellten Dienstleistungen vereinbar ist;
die Anzahl des zweiten Typs von durch die Quell-IP-Adresse innerhalb einer zweiten, voreingestellten Zeitspanne eingeleiteten legalen URL-Anfragen zu bestimmen, wenn festgestellt wird, dass die Quell-IP-Adresse in einer zweiten Sammlung eingeschlossen ist, wobei die zweite Sammlung für die Speicherung von durch den Server eingeschränkten IP-Adressen und der entsprechenden Anzahl an Anfragen nach den Einschränkungen vorgesehen ist; und
zu bestimmen, dass der Zielangriffstyp der ersten Linkanfrage ein legaler URL-Angriff ist, wenn festgestellt wird, dass die Anzahl des zweiten Typs von legalen, durch die Quell-IP-Adresse innerhalb der zweiten voreingestellten Zeitspanne eingeleiteten URL-Anfragen grösser ist, als die Anzahl der nach der Einschränkung empfangenen Anfragen, die erste Linkanfrage zurückzuweisen und die Quell-IP-Adresse zu der ersten Sammlung hinzuzufügen.

14. Die Vorrichtung gemäss Anspruch 13, bei der die Verarbeitungseinheit weiter konfiguriert ist um:
Zu bestimmen, dass die erste Linkanfrage eine legale Anfrage ist, wenn festgestellt wird, dass die Anzahl des zweiten Typs von legalen URL-Anfragen, die durch die Quell-IP-Adresse innerhalb der zweiten, voreingestellten Zeitspanne eingeleitet werden, kleiner ist als oder gleich der Anzahl der nach der Einschränkung empfangenen Anfragen,

15. Die Vorrichtung gemäss Anspruch 13, bei der die Verarbeitungseinheit weiter konfiguriert ist um:
Die Anzahl des zweiten Typs von legalen URL-Anfragen zu bestimmen, die durch die Quell-IP-Adresse innerhalb einer dritten, voreingestellten Zeitspanne eingeleitet wurden, wenn festgestellt wird, dass die Quell-IP-Adresse nicht in der zweiten Sammlung eingeschlossen ist;
die Anzahl der Anfragen von der Quell-IP-Adresse einzuschränken und die Quell-IP-Adresse zu der zweiten Sammlung hinzuzufügen, wenn festgestellt wird, dass die Anzahl des zweiten Typs von legalen URL-Anfragen, die durch die Quell-IP-Adresse innerhalb der dritten, voreingestellten Zeitspanne eingeleitet wurden, grösser ist als ein vierter, voreingestellter Schwellwert; und
zu bestimmen, dass die erste Linkanfrage eine legale Anfrage ist, wenn festgestellt wird, dass die Anzahl des zweiten Typs von legalen URL-Anfragen, die durch die Quell-IP-Adresse innerhalb der dritten, voreingestellten Zeitspanne eingeleiet wurden geringer ist als oder gleich dem vierten, voreingestellten Schwellwert.

## Revendications

1. Une méthode de mise en œuvre d'une anti-attaque de serveur, comprenant les pas suivants:
recevoir (201), par un serveur, une première demande de liaison d'un dispositif client directement, où la première demande de liaison comprend une adresse IP origine qui initie la première demande de liaison;
déterminer (202), par le serveur, un type de demande cible de la première demande de liaison, sur la base de l'information des caractéristiques de la première demande de liaison; où l'information des caractéristiques de la première demande de liaison comprend au moins l'une des données de la demande, une règle de demande et le contenu demandé; et le type de demande cible comprend une demande SYN Flood, une demande d'URL illégale ou une demande d'URL légale;
déterminer (203), par le serveur, le nombre de demandes qui sont initiées par l'adresse IP origine au cours d'une première période prédéfinie et qui ont un type de demande cohérent avec le type de demande cible, sur la base du type de demande cible de la première demande de liaison; et
s'il est déterminé que le nombre de demandes, qui sont initiées par l'adresse IP origine et qui ont un type de demande cohérent avec le type de demande cible, est supérieur au seuil prédéfini correspondant au type de demande cible, déterminer (204), par le serveur, un type d'attaque cible de la première demande de liaison, sur la base du type de demande cible, refuser la première demande de liaison, et ajouter l'adresse IP origine à une première collecte, où la première collecte est configurée pour stocker les adresses IP dont l'accès est refusé par le serveur.

2. La méthode conformément à la revendication 1, où
la détermination, par le serveur, du type de demande cible de la première demande de liaison sur la base de l'information des caractéristiques de la première demande de liaison comprend en outre les pas suivants:
s'il est déterminé, sur la base des données de la demande de la première demande de liaison, que les données de la demande ne peuvent pas être réunies dans un format de demande reconnaissable par le serveur, déterminer (302, 402, 403), par le serveur, que le type de demande cible de la première demande de liaison est une demande SYN Flood;
la détermination, par le serveur, du nombre de demandes qui sont initiées par l'adresse IP origine au cours d'une première période prédéfinie et qui ont un type de demande cohérent avec le type de demande cible, comprend en outre les pas suivants:
déterminer (404), par le serveur, le nombre de demandes qui sont initiées par l'adresse IP origine au cours de la première période prédéfinie et qui ont un type de demande de la demande SYN Flood; et
s'il est déterminé que le nombre de demandes, qui sont initiées par l'adresse IP origine et qui ont un type de demande cohérent avec le type de demande cible, est supérieur au seuil prédéfini, la détermination, par le serveur, d'un type d'attaque cible de la première demande de liaison, sur la base du type de demande cible, comprend en outre les pas suivants:
s'il est déterminé que le nombre de demandes SYN Flood initiées par l'adresse IP origine est supérieur au premier seuil prédéfini, déterminer (405, 406), par le serveur, que le type d'attaque cible de la première demande de liaison est une attaque SYN Flood.

3. La méthode conformément à la revendication 1, où:
la détermination, par le serveur, du type de demande cible de la première demande de liaison, sur la base de l'information des caractéristiques de la première demande de liaison, comprend en outre les pas suivants:
s'il est déterminé, sur la base des données de la demande et de la règle de demande de la première demande de liaison, que les données de la demande peuvent être réunies dans un format de demande reconnaissable par le serveur, mais la règle de demande n'est pas conforme à la règle prédéfinie, déterminer (304, 408, 409), par le serveur, que le type de demande cible de la première demande de liaison est une demande d'URL illégale;
la détermination, par le serveur, du nombre de demandes qui sont initiées par l'adresse IP origine au cours d'une première période prédéfinie et qui ont un type de demande cohérent avec le type de demande cible, comprend en outre les pas suivants:
déterminer (410), par le serveur, le nombre de demandes qui sont initiées par l'adresse IP origine au cours de la première période prédéfinie et qui ont le type de demande de la demande URL illégale; et
s'il est déterminé que le nombre de demandes, qui sont initiées par l'adresse IP origine et qui ont un type de demande cohérent avec le type de demande cible, est supérieur au seuil prédéfini, la détermination, par le serveur, du type d'attaque cible de la première demande de liaison, sur la base du type de demande cible, comprend en outre les pas suivants :
s'il est déterminé que le nombre de demandes d'URL illégales initiées par l'adresse IP origine est supérieur au deuxième seuil prédéfini, déterminer (411, 412), par le serveur, que le type d'attaque cible de la première demande de liaison est une attaque URL illégale.

4. La méthode conformément à la revendication 1, où la détermination, par le serveur, du type de demande cible de la première demande de liaison, sur la base de l'information des caractéristiques de la première demande de liaison comprend en outre les pas suivants:
s'il est déterminé, sur la base des données de la demande et de la règle de demande de la première demande de liaison, que les données de la demande peuvent être réunies dans un format de demande reconnaissable par le serveur et la règle de demande est conforme à la règle prédéfinie, déterminer (305), par le serveur, que le type de demande cible de la première demande de liaison est une demande d'URL légale candidate; et
s'il est déterminé, sur la base du contenu demandé de la première demande de liaison, que le contenu demandé est incohérent avec le contenu des services fournis par le serveur, déterminer (306, 307, 414, 415), par le serveur, que la demande d'URL légale candidate est un premier type de demande d'URL légale ;
la détermination, par le serveur, du nombre de demandes qui sont initiées par l'adresse IP origine au cours de la première période prédéfinie et qui ont un type de demande cohérent avec le type de demande cible, comprend en outre les pas suivants:
déterminer (416), par le serveur, le nombre de demandes qui sont initiées par l'adresse IP origine au cours de la première période prédéfinie et qui ont un type de demande du premier type de la demande d'URL légale; et
s'il est déterminé que le nombre de demandes, qui sont initiées par l'adresse IP origine et qui ont un type de demande cohérent avec le type de demande cible, est supérieur au seuil prédéfini, la détermination, par le serveur, du type d'attaque cible de la première demande de liaison, sur la base du type de demande cible, comprend en outre les pas suivants:
s'il est déterminé que le nombre du premier type de demandes d'URL légales est supérieur au troisième seuil prédéfini, déterminer (417, 418), par le serveur, que le type d'attaque cible de la première demande de liaison est une attaque URL légale.

5. La méthode conformément à la revendication 4, comprenant en outre les pas suivants:
s'il est déterminé que le contenu demandé est cohérent avec le contenu des services fournis par le serveur, déterminer (306, 308, 420), par le serveur, que la demande d'URL légale candidate est un deuxième type de demande d'URL légale;
s'il est déterminé que l'adresse IP origine est comprise dans une deuxième collecte, déterminer (421, 422), par le serveur, le nombre de demandes d'URL légales du deuxième type initiées par l'adresse IP origine au cours d'une deuxième période prédéfinie, où la deuxième collecte est configurée pour stocker les adresses IP restreintes par le serveur et le nombre correspondant de demandes reçues après les restrictions; et
s'il est déterminé que le nombre de demandes d'URL légales du deuxième type, initiées par l'adresse IP origine au cours de la deuxième période prédéfinie, est supérieur au nombre de demandes reçues après une restriction, déterminer (423,424), par le serveur, que le type d'attaque cible de la première demande de liaison est une attaque URL légale; rejeter la première demande de liaison et ajouter l'adresse IP origine a la première collecte.

6. La méthode conformément à la revendication 5, comprenant en outre les pas suivants:
s'il est déterminé que le nombre de demandes d'URL légales du deuxième type, initiées par l'adresse IP origine au cours de la deuxième période prédéfinie, est inférieur ou égal au nombre de demandes reçues après la restriction, déterminer (423, 425), par le serveur, que la première demande de liaison est une demande légale.

7. La méthode conformément à la revendication 5, comprenant en outre les pas suivants:
s'il est déterminé que l'adresse IP origine n'est pas comprise dans la deuxième collecte, déterminer (421,426), par le serveur, le nombre de demandes URL légales du deuxième type initiées par l'adresse IP origine au cours de la troisième période prédéfinie;
s'il est déterminé que le nombre de demandes URL légales du deuxième type initiées par l'adresse IP origine au cours de la troisième période prédéfinie est supérieur au quatrième seuil prédéfini, restreindre, par le serveur, le nombre de demandes provenant de l'adresse IP origine et ajouter (427, 428) l'adresse IP origine à la deuxième collecte, où la troisième période prédéfinie est antérieure à la deuxième période prédéfinie; et
s'il est déterminé que le nombre de demandes URL légales du deuxième type, initiées par l'adresse IP origine au cours de la troisième période prédéfinie, est inférieur ou égal au quatrième seuil prédéfini, déterminer (427, 429), par le serveur, que la première demande de liaison est une demande légale.

8. La méthode conformément à l'une quelconque des revendications 1 à 7, où, après avoir reçu la première demande de liaison et avant de déterminer le type de demande cible de la première demande de liaison, la méthode comprend en outre le pas suivant:
déterminer, par le serveur, que l'adresse IP origine n'est pas comprise dans la première collecte.

9. Un appareil de mise en œuvre d'une anti-attaque de serveur, comprenant les éléments suivants:
une unité de réception configurée pour recevoir directement une première demande de liaison provenant d'un dispositif client, où la première demande de liaison comprend une adresse IP origine initiant la première demande de liaison; et
une unité de traitement configurée pour:
déterminer le type de demande cible de la première demande de liaison, sur la base de l'information des caractéristiques de la première demande de liaison, où l'information des caractéristiques de la première demande de liaison comprend au moins une donnée de la demande, une règle de demande et le contenu demandé; et le type de demande cible comprend une demande SYN Flood, une demande d'URL illégale ou une demande d'URL légale;
déterminer le nombre de demandes initiées par l'adresse IP origine au cours de la première période prédéfinie et ayant un type de demande cohérent avec le type de demande cible, sur la base du type de demande cible de la première demande de liaison; et
s'il est déterminé que le nombre de demandes, qui sont initiées par l'adresse IP origine et qui ont un type de demande cohérent avec le type de demande cible, est supérieur au seuil prédéfini correspondant au type de demande cible, déterminer un type d'attaque cible de la première demande de liaison, sur la base du type de demande cible, rejeter la première demande de liaison et ajouter l'adresse IP origine à la première collecte, ou la première collecte est configurée pour stocker les adresses IP dont l'accès est refusé par le serveur.

10. L'appareil conformément à la revendication 9, où l'unité de traitement est configurée en outre pour effectuer les pas suivants:
s'il est déterminé, sur la base des données de la demande de la première demande de liaison, que les données de la demande ne peuvent pas être réunies dans un format de demande reconnaissable par le serveur, déterminer que le type de demande cible de la première demande de liaison est une demande SYN Flood;
déterminer le nombre de demandes qui sont initiées par l'adresse IP origine au cours de la première période prédéfinie et qui ont un type de demande de la demande SYN Flood; et
s'il est déterminé que le nombre de demandes SYN Flood initiées par l'adresse IP origine est supérieur au premier seuil prédéfini, déterminer que le type d'attaque cible de la première demande de liaison est une attaque SYN Flood.

11. L'appareil conformément à la revendication 9, où l'unité de traitement est configurée en outre pour effectuer les pas suivants:
s'il est déterminé, sur la base des données de la demande et de la règle de demande de la première demande de liaison, que les données de la demande peuvent être réunies dans un format de demande reconnaissable par le serveur, mais la règle de demande n'est pas conforme à la règle prédéfinie, déterminer que le type de demande cible de la première demande de liaison est une demande d'URL illégale;
déterminer le nombre de demandes initiées par l'adresse IP origine au cours de la première période prédéfinie qui ont un type de demande de la demande d'URL illégale; et
s'il est déterminé que le nombre de demandes d'URL illégales, initiées par l'adresse IP origine, est supérieur au deuxième seuil prédéfini, déterminer que le type d'attaque cible de la première demande de liaison est une attaque d'URL illégale.

12. L'appareil conformément à la revendication 9, où l'unité de traitement est configurée en outre pour effectuer les pas suivants:
s'il est déterminé, sur la base des données de la demande et la règle de demande de la première demande de liaison, que les données de la demande peuvent être réunies dans un format de demande reconnaissable par le serveur et la règle de demande est conforme à la règle prédéfinie, déterminer que le type de demande cible de la première demande de liaison est une demande d'URL légale candidate;
s'il est déterminé, sur la base du contenu demandé de la première demande de liaison, que le contenu demandé n'est pas cohérent avec le contenu des services fournis par le serveur, déterminer que la demande d'URL légale candidate est un premier type de demande d'URL légale;
déterminer le nombre de demandes initiées par l'adresse IP origine, au cours de la première période prédéfinie et qui ont un type de demande du premier type de demande d'URL légale; et
s'il est déterminé que le nombre de demandes du premier type de demandes d'URL légales, initiées par l'adresse origine, est supérieur au troisième seuil prédéfini, déterminer que le type d'attaque cible de la première demande de liaison est une attaque d'URL légale.

13. L'appareil conformément à la revendication 12, où l'unité de traitement est en outre configurée pour effectuer les pas suivants:
s'il est déterminé que le contenu demandé est cohérent avec le contenu des services fournis par le serveur, déterminer que la demande d'URL légale candidate est un deuxième type de demande d'URL légale;
s'il est déterminé que l'adresse IP origine est comprise dans une deuxième collecte, déterminer le nombre du deuxième type de demandes d'URL légales, initiées par l'adresse IP origine, au cours de la deuxième période prédéfinie, où la deuxième collecte doit stocker les adresses IP origine restreintes par le serveur et le nombre correspondant des demandes après les restrictions; et
s'il est déterminé que le nombre du deuxième type de demandes d'URL légales, initiées par l'adresse IP origine au cours de la deuxième période prédéfinie, est supérieur au nombre de demandes reçues après une restriction, déterminer que le type d'attaque cible de la première demande de liaison est une attaque d'URL légale, rejeter la première demande de liaison et ajouter l'adresse IP origine à la première collecte.

14. L'appareil conformément à la revendication 13, où l'unité de traitement est en outre configurée pour effectuer les pas suivants:
s'il est déterminé que le nombre du deuxième type de demandes d'URL légales, initiées par l'adresse IP origine au cours de la deuxième période prédéfinie, est inférieur ou égal au nombre de demandes reçues après la restriction, déterminer que la première demande de liaison est une demande légale.

15. L'appareil conformément à la revendication 13, où l'unité de traitement est en outre configurée pour effectuer les pas suivants:
s'il est déterminé que l'adresse IP origine n'est pas comprise dans la deuxième collecte, déterminer le nombre du deuxième type de demandes d'URL légales initiées par l'adresse IP origine au cours de la troisième période prédéfinie;
s'il est déterminé que le nombre du deuxième type de demandes d'URL légales, initiées par l'adresse IP origine au cours de la troisième période prédéfinie, est supérieur au quatrième seuil prédéfini, restreindre le nombre de demandes provenant de l'adresse IP origine et ajouter l'adresse IP origine à la deuxième collecte, où la troisième période prédéfinie est antérieure à la deuxième période prédéfinie; et
s'il est déterminé que le nombre du deuxième type de demandes d'URL légales, initiées par l'adresse IP origine au cours de la troisième période prédéfinie, est inférieur ou égal au quatrième seuil prédéfini, déterminer que la première demande de liaison est une demande légale.
